# EUROPEAN PATENT APPLICATION

(11) **EP 2 163 381 A2**
(43) Date of publication of application: **17.03.2010**
(21) Application number: 09170134.2
(22) Date of filing: 11.09.2009
(51) Int. Cl.: B32B 27/08, C08J 7/04, G03H 1/02

(54) **Holographic film**

(30) Priority: 12.09.2008 GB 0816776
(71) Applicant: API Foils Limited, Cheshire SK12 1ND EH54 5DJ, Poynton (GB)
(72) Inventor: Bleasdale, Tony, Chorley, Lancashire PR7 2FQ (GB); Williamson, David, Bollington, Macclesfield SK10 5BR (GB)
(74) Representative: Slingsby, Philip Roy

(57) **Abstract**

The present invention provides a film comprising:
a base layer, wherein the base layer comprises a core layer comprising a compostable polymer and each surface of the core layer bears a sealant layer;
an embossing layer contiguously attached to the base layer suitable for embossing, and for bearing a diffractive structure thereby defining a holographic surface.

## Description

The present invention relates to a holographic film, more specifically to a holographic film comprising a compostable polymeric base layer. The present invention also provides a material comprising the holographic film and a substrate, a packaging enclosure comprising the holographic film and a method for forming the holographic film.

Holograms are widely used in packaging materials for decorative purposes or as a security marking. The mass production of holograms on packaging materials is achieved by embossing a base film and coating the base film with a diffractive layer, such as aluminium. The base film is typically formed from a polymer such as PET or OPP, which is not compostable. The base film is capable of withstanding the high temperature and/or pressure of the embossing process to produce a high quality hologram.

Packaging of products makes up a large proportion of waste in landfill sites. Therefore, it is highly desirable for packaging to be compostable. Consumers are more aware today than ever before of the need to reduce their waste which is not compostable. Manufacturers are developing new packaging materials which are compostable. However, many packaging materials are coated in non-degradable plastic including the polymeric base film used for the production of holograms. This significantly increases the proportion of the packaging which is not compostable.

UK Patent Application No. 0622679.9 describes a packaging material comprising a substrate of compostable material having on an external surface, a metallised and printed surface film of a compostable polymer. This packaging material is intended for use as a package with a high-quality external appearance for packaging relatively high-value goods where the substrate may comprise paperboard made from wood fibre or another cellulosic material.

Whilst the packaging material disclosed in UK Patent Application No. 0622679.9 may provide a high quality metallised and printed surface whilst comprising a compostable substrate and surface film, it does not disclose how to increase the proportion of compostable material of a packaging material comprising a hologram. Accordingly, there is a need for a holographic packaging material comprising a higher proportion of compostable material. There is also a need for a compostable holographic packaging material which has a high quality hologram.

According to a first aspect of the present invention there is provided a film comprising:
a base layer, wherein the base layer comprises a core layer comprising a compostable polymer and each surface of the core layer bears a sealant layer;
an embossed layer contiguously attached to the base layer bearing a diffractive structure thereby defining a holographic surface.

The film may be already embossed to create a holographic structure. Alternatively, the film may be suitable for embossing to create a holographic structure,

The present invention also provides a film comprising:
a base layer, wherein the base layer comprises a core layer comprising a compostable polymer and each surface of the core layer bears a sealant layer; and
an embossing layer contiguously attached to the base layer suitable for embossing and for bearing a diffractive structure to thereby define a holographic surface.

The embossing layer may be integral in the base film. Alternatively, the embossing layer may be formed on the base film by adding to the base film a suitable UV-curable polymer which is then (a) part cured through exposure to ultra-violet radiation of a suitable wavelength and intensity, (b) embossed and then (c) fully or substantially fully cured. That full or substantially full curing may conveniently be done immediately after embossing, through exposure to ultra-violet radiation of a suitable wavelength and intensity.

The film provided by the present invention is advantageous for a number of reasons. In one embodiment, the holographic film provided by the present invention is advantageous because the base layer comprises a compostable polymer and, therefore, the film is more compostable compared to known holographic films. The film may also provide a high quality holographic surface.

According to a second aspect the present invention provides a film comprising:
a base layer, wherein the base layer comprises a core layer comprising a compostable polymer and each surface of the core layer bears a sealant layer;
an embossed layer bearing a diffractive structure thereby defining a holographic surface; and
a thermostable layer integral with the base layer and positioned on the opposite surface of the base layer to the embossed layer; wherein the embossed layer has a lower thermostability compared to the thermostable layer and the base layer is substantially free from defects introduced by substantial detrimental modification during embossing by virtue of the presence of the thermostable layer.

The present invention also provides a film comprising:
a base layer, wherein the base layer comprises a core layer comprising a compostable polymer and each surface of the core layer bears a sealant layer;
an embossing layer suitable for embossing and for bearing a diffractive structure to thereby define a holographic surface.; and
a thermostable layer integral with the base layer and positioned on the opposite surface of the base layer to the embossed layer; wherein the embossed layer has a lower thermostability compared to the thermostable layer and the base layer is substantially free from defects introduced by substantial detrimental modification during embossing by virtue of the presence of the thermostable layer.

The embossing layer may again be integral in the base film. Alternatively, the embossing layer may be formed on the base film by adding to the base film a suitable UV-curable polymer which is then (a) part cured through exposure to ultra-violet radiation of a suitable wavelength and intensity, (b) embossed and then (c) fully or substantially fully cured. That full or substantially full curing may conveniently be done immediately after embossing, through exposure to ultra-violet radiation of a suitable wavelength and intensity.

Compostable polymers are more difficult to handle compared to synthetic non-compostable polymers. Compostable polymers often have high moisture content and are susceptible to moisture loss and gain which causes undesired effects on the film. Accordingly, it is necessary to provide the compostable polymer in a core layer with a sealant layer on each surface of the core layer. The sealant layers prevent moisture loss and/or gain in the core layer. However, when the sealant layers, which may be formed from polymers such as nitrocellulose and/or PvDC or acrylic polymers and copolymers including one or more of those polymers together optionally with one or more other polymers, are subjected to a high temperature and/or pressure, such as during the embossing process, visual defects are created which reduces the quality of the hologram. These visual defects include shadowing and tarnishing of the film.

The present inventors have found that the use of a thermostable layer which is more thermostable compared to the embossed layer acts to prevent the detrimental effects of heat and/or pressure on the base layer during the embossing process. Accordingly, the holographic surface produced has fewer visual defects which creates a high quality hologram.

According to a third aspect of the invention there is provided a material comprising a substrate and a film, as defined above.

According to a fourth aspect of the invention there is provided a packaging enclosure for a product, wherein the packaging enclosure is formed from a material as defined above.

According to a fifth aspect of the invention there is provided a method for forming a holographic film, comprising:
(a) providing a base layer, wherein the base layer comprises a core layer comprising a compostable polymer and each surface of the core layer bears a sealant layer;
(b) providing an embossing layer;
(c) embossing the embossing layer to form an embossed surface, wherein the embossing layer is contiguously attached to the base layer during embossing; and
(d) depositing a diffractive structure on the embossed surface; steps (c) and (d) imparting a hologram.

The present invention also provides a method for forming a holographic film, comprising:
(a) providing a base layer, wherein the base layer comprises a core layer comprising a compostable polymer and each surface of the core layer bears a sealant layer;
(b) providing an embossing layer and a thermostable layer;
(c) embossing the embossing layer to form an embossed surface, wherein the thermostable layer prevents substantial detrimental modification to the base layer during embossing; and
(d) depositing a diffractive structure on the embossed surface; steps (c) and (d) imparting a hologram.

According to a sixth aspect of the invention there is provided a method for forming a holographic material comprising the method for forming a holographic film as defined above and a step of depositing the holographic film on a surface of a substrate.

According to a seventh aspect of the invention there is provided a use of a thermostable layer for protecting a base layer from substantial detrimental modification during embossing, wherein the base layer comprises a core layer comprising a compostable polymer and each surface of the core layer bears a sealant layer.

For a better understanding of the present invention and to show how the same may be carried into effect, embodiments of the present invention will now be described by way of example only with reference to the accompanying drawings, in which:
Figure 1 shows a schematic cross-sectional structure of a base layer 1 comprising a core layer 2 and two sealant layers 3a and 3b;
Figure 2 shows a schematic cross-sectional structure of a holographic film comprising a base layer comprising a core layer 2 and two sealant layers 3a and 3b, where sealant layer 3a is embossed to form an embossed surface 5, which is coated with a diffractive structure 6.
Figure 3 shows a schematic cross-sectional structure of a holographic film comprising a base layer comprising a core layer 2 and two sealant layers 3a and 3b and one embossed layer 4a, where the embossed layer 4a is embossed to form an embossed surface 5, which is coated with a diffractive structure 6;
Figure 4 shows a schematic cross-sectional structure of a holographic film comprising a base layer comprising a core layer 2 and two sealant layers 3a and 3b and one thermostable layer 4b where sealant layer 3a of the base layer is embossed to form an embossed surface 5, which is coated with a diffractive structure 6;
Figure 5 shows a schematic cross-sectional structure of a holographic film comprising a base layer comprising a core layer 2 and two sealant layers 3a and 3b, an embossed layer 4a and a thermostable layer 4b where the embossed layer 4a is embossed to form an embossed surface 5, which is coated with a diffractive structure 6; and

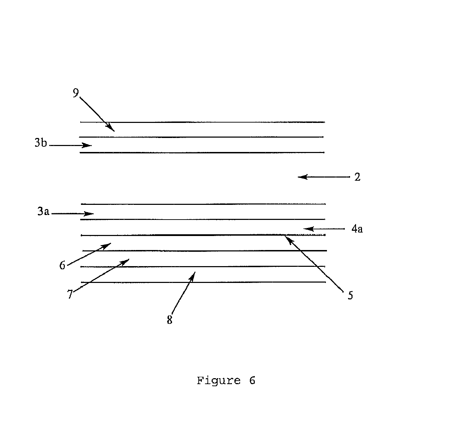

Figure 6 shows a schematic cross-sectional structure of a holographic packaging material comprising the holographic film of Figure 3, a substrate 8 and a print receptive protective coating 9.

In the context of the present invention, the term "compostable" means that the product or material to which it refers is biodegradable. A biodegradable product or material is capable of being broken down by micro-organisms. The term "compostable" may mean that the product or material disintegrates. The term "disintegrates" means that the structure of the product or material physically falls apart into small fragments which are preferably not visible to the naked eye, at the end of a typical composting cycle. A typical composting cycle may last for, for example, 6 or 12 months under normal domestic composting conditions. When the term "compostable" is applied to a polymer, this means that the polymer is capable of being broken down by micro-organisms. Preferably, total conversion of the polymer to components including CO₂, water, inorganic compounds and biomass under aerobic conditions is achieved. This conversion preferably occurs at a high rate compatible with the normal composting process of vegetable waste. In particular, a material or product maybe considered to be compostable if it meets the requirements of STM D533893 or ISO CD 14855 or European Standard EN13432.

In the context of the present invention, the term "thermostability" when referring to a specific layer in the film refers to the ability of the layer to resist physical and/or chemical change when subjected to heat. The thermostability of a layer may also refer to the glass transition temperature, Tg, or softening temperature of the layer which is the temperature at which the layer becomes soft on heating. Accordingly, if one layer is more thermostable than another layer in the film, the layer with the higher thermostability has a higher glass transition temperature or softening temperature. Such properties may be analysed and measured using instrumental thermal techniques such as Differential Scanning Calorimetry

The use of a thermostable layer in the film according to the present invention which has a higher thermostability compared to the embossing layer is particularly advantageous due to the high temperature used during embossing. The presence of the thermostable layer on the opposite surface of the base layer to the embossed layer ensures that detrimental modifications to the base layer, particularly those caused by the sealant layers, are not introduced during embossing. The thermostable layer is thermostable at the temperature used for embossing and, therefore, has a glass transition temperature or softening temperature which is higher than the embossing temperature. The embossing is typically carried out at a temperature of 60°C to 200°C, preferably 80°C to 160°C. Accordingly, the thermostable layer is preferably thermostable at a temperature in the range of 60°C to 200°C, more preferably 80°C to 160°C and has a glass transition temperature or softening temperature which is preferably higher than the temperature used for embossing in the range of 60°C to 200°C, more preferably 80°C to 160°C. Preferably, the thermostable layer has a glass transition temperature or softening temperature equal or higher than 60°C, more preferably 80°C.

The film according to the first and second aspects of the present invention may take a number of different configurations.

In the embodiment, wherein the film comprises a thermostable layer integral with the base layer and positioned on the opposite surface of the base layer to the embossed layer, the film may take a number of different configurations.

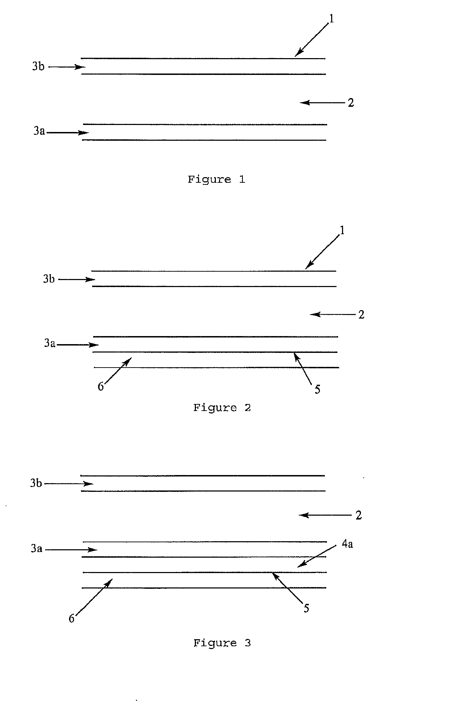

In one embodiment of the present invention the film comprises the core layer and sealant layers, wherein the sealant layer on one surface of the core layer is the thermostable layer and the sealant layer on the opposite surface of the core layer is the embossed layer. This embodiment is shown, for example, in Figure 2 where sealant layer 3a is the embossed layer and sealant layer 3b is the thermostable layer. The embossed layer 3a has a lower thermostability compared to the thermostable layer 3b.

In one embodiment of the present invention the sealant layer on one surface of the core layer is the thermostable layer and the sealant layer on the opposite surface of the core layer bears the embossed layer. An example schematic cross-sectional layout of this configuration is shown in Figure 3, where a core layer 2 and sealant layers 3a and 3b form the base layer and embossed layer 4a is positioned on sealant layer 3a. In this embodiment sealant layer 3b is the thermostable layer which is more thermostable compared to the embossed layer 4a. In one embodiment the sealant layer 3a is also more thermostable compared to the embossed layer 4a. The surface of the embossed layer 4a facing away from the core layer is embossed to form an embossed surface 5 and bears a diffractive structure 6 to form a holographic surface.

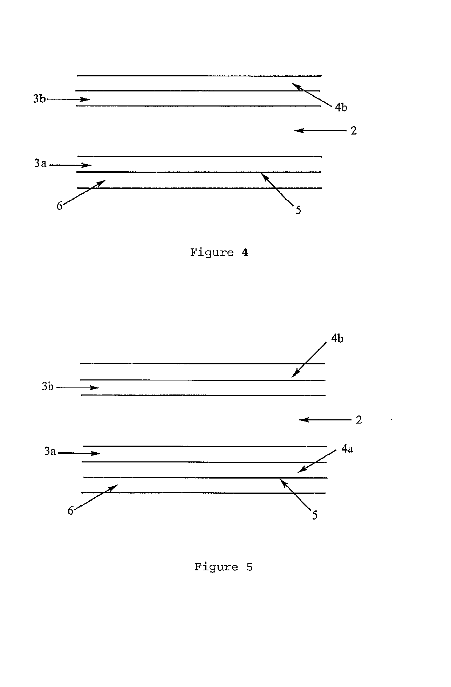

In a further embodiment of the present invention, the sealant layer on one surface of the core layer is the embossed layer and the sealant layer on the opposite surface of the core layer bears the thermostable layer. An example schematic cross-sectional layout of this configuration is shown in Figure 4, where a core layer 2 and sealant layers 3a and 3b form the base layer and thermostable layer 4b is positioned on sealant layer 3b. In this embodiment sealant layer 3a is the embossed layer which is less thermostable compared to the thermostable layer 4b. In one embodiment the sealant layer 3b is also more thermostable compared to the embossed sealant layer 3a. The surface of the sealant layer 3a of the base layer 1 facing away from the core layer is embossed to form an embossed surface 5 and bears a diffractive structure 6 to form a holographic surface.

In a further embodiment of the present invention, the sealant layer on one surface of the core layer bears the embossed layer and the sealant layer on the opposite surface of the core layer bears the thermostable layer. An example schematic cross-sectional layout of this configuration is shown in Figure 5, where a core layer 2 and sealant layers 3a and 3b form the base layer 1, the embossed layer 4a is positioned on sealant layer 3a and the thermostable layer 4b is positioned on sealant layer 3b. The thermostable layer 4b is more thermostable compared to the embossed layer 4a. In one embodiment the one or both of the sealant layers 3a and 3b are more thermostable compared to the embossed layer 4a. The embossed layer 4a is embossed to form an embossed surface 5 and bears a diffractive structure 6 to form a holographic surface. This embodiment is particularly advantageous because it comprises the embossed layer 4a and the thermostable layer 4b minimises damage to the base layer, particularly the sealant layers during embossing.

The film according to the present invention preferably comprises multiple thermostable layers which are more thermostable compared to the embossed layer.

The thickness of the film according to the present invention is typically 100 µm or less,. The thickness of the film is preferably 20 to 30 µm, ideally 24 to 25 µm.

The base layer in the film comprises a compostable polymer. The compostable polymer is typically a biopolymer or bioplastic including non-oil-based polymers. The polymer may be derived from a plant, such as a cellulose-based polymer. Alternatively, the polymer may be produced by a fermentation process, such as the fermentation of sugars. The compostable polymer is typically selected from the group of cellulosic films such as cellulose acetate or cellophane; thermoplastic oxyalkanoyl polymers, such as 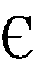 -caprolactone polymers, beta propriolactone, d-valerolactone, polyesters of 3-hydroxybutyric acid, 3-hydroxyvaleric acid and mixtures thereof as well as copolymers of any of the above. The compostable polymer may be graft polymers prepared by reacting a lactone such as 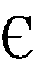 -caprolactone with hydroxyl or amino functional resins such as hydrolyzed ethylene-vinyl acetate copolymers; segmented polyurethane prepared by reacting polycaprolactone bearing terminal hydroxyl groups with diisocyanates and, optionally, chain-extending glycols such as 1,4 butanediol. The compostable polymer may be aliphatic polyesters such as polyglycolic acid, polylactic acid (PLA), polydioxanone, poly(trimethylene carbonate) and their co- and terpolymers as well as blends of any of the above with polyesters prepared from alkanediols and alkanedicarboxylic acids including oxalates. The compostable polymer may be polyhydroxyaliphatic acids (PHAA) or PHBV polymers which are polyesters of 3-hydroxybutyric (HB) and 3 hydroxyvaleric (HV) acids.

In a preferred embodiment, the compostable polymer is a cellulosic film.

The base layer may be thermoplastic or non-thermoplastic. The base layer typically does not include materials manufactured from wood pulp such as paper and card.

The thickness of the base layer is typically 100 µm or less,. The thickness of the film is preferably 20 to 30 µm, more preferably 20 to 25 µm, ideally 23 µm.

The base layer comprises a core layer comprising the compostable polymer and a sealant layer on each surface of the core layer. The sealant layers act to prevent moisture loss and/or gain in the base layer and, therefore, ensure that the base layer provides a uniform surface to allow a high quality holographic surface to be formed. The sealant layers may be the same or in one embodiment the sealant layers are different. The sealant layers may differ by thickness and/or composition. In one embodiment the sealant layers have different thermostability properties.

The thickness of each sealant layer is typically less than 10 µm, preferably less than 5 µm and more preferably 1 µm. The thickness of the core layer is typically 50 µm or less, preferably 25 µm or less, more preferably 20 to 25 µm, most preferably 21 µm. The sealant layers typically comprise nitrocellulose and/or PvDC or acrylic polymers and copolymers including one or more of those polymers together optionally with one or more other polymers. The sealant layers are preferably compostable.

The thermostable layer in the film ensures that the base layer, particularly the sealant layers are substantially free from defects, which may be introduced by embossing. The defects may be due to detrimental modifications to the structure and/or chemical composition of the sealant layers. The defects may include shadowing and/or tarnishing of the film.

Embossing is carried out by applying heat and/or pressure to a suitable surface to form a surface relief.

In the embodiment of the present invention wherein the film does not comprise a thermostable layer, a good quality holographic surface may be provided wherein the base layer, particularly the sealant layers, are substantially free from defects. The defects to the base layer may be prevented during embossing by a number of different means. For example, the thickness of the base layer in the film may be sufficiently thick to ensure that the effects of temperature and/or pressure during embossing on one surface of the base layer do not introduce defects to the sealant layer on the opposite surface of the base layer. Alternatively, during the embossing step, the sealant layer on opposite surface of the base layer to the surface to be embossed may be held in contact with a cooling means which prevents the formation of defects in the base layer. A further way to prevent defects forming during embossing is to provide the embossed surface using short intervals of the required pressure and temperature to allow an embossed surface to be gradually produced whilst not introducing defects to the sealant layer on the opposite surface.

In the embodiment of the present invention wherein the film comprises a thermostable layer, the thermostable layer ensures that the sealant layers of the base layer maintain a sufficiently uniform composition and/or structure when subjected to heat and/or pressure during the embossing process to create a high quality holographic surface. The thermostable layer also preferably maintains a sufficiently uniform chemical composition and/or structure when subjected to heat and/or pressure during the embossing process. The thermostable layer is typically capable of ensuring that the base layer and, preferably the thermostable layer itself also maintains a sufficiently uniform composition and/or structure at temperatures of 60-200°C, preferably 80-160°C and/or pressures of 50 to 500 Ncm⁻¹

The thermostable layer is typically a lacquer comprising a thermoplastic material such as acrylic, methylmethacrylate, nitrocellulose or mixtures thereof **[is this correct?].** In one embodiment one of the sealant layers is the thermostable layer.

The thermostable layer is preferably compostable. The thermostable layer may be of any flexible material that has a higher Tg and softening point than the embossable layer and/or a higher specific heat capacity than the embossable layer If a non-compostable thermostable layer is used in the present invention, the proportion of the holographic film which is non-compostable is reduced by a minor amount due to the thermostable layer making up a very small part. The holographic film of the present invention still provides significantly improved percentage of compostable materials compared to known holographic films.

The thickness of each thermostable layer is typically less than 10 µm most preferably 0.6 to 1.5 µm.

The embossed layer is typically a solvent based or water based thermoplastic coating such as acrylic, acrylic co-polymers, modified nitrocellulose, polyamide, polyurethane, styrene maleic anhydride, copolymers based on vinyl resins or mixtures thereof. In one embodiment one of the sealant layers is the embossed layer.

The embossed layer is preferably compostable. If a non-compostable embossed layer is used in the present invention, the proportion of the holographic film which is non-compostable is reduced by a minor amount due to the embossed layer making up a very small part. The holographic film of the present invention still provides significantly improved percentage of compostable materials compared to known holographic films.

The thickness of each embossed layer is typically less than 10 µm, preferably less than 5 µm, more preferably less than 2 µm and most preferably 0.6 to 1.5 µm.

The diffractive structure of the holographic film according to the present invention may comprise any suitable material which is diffractive or semi-diffractive. The diffractive structure may comprise one or more layers each having suitable refractive index to impart a diffractive surface. Typically the diffractive structure comprises one or more layers of a metal, such as aluminium or copper. The diffractive structure may comprise a dielectric material such as zinc sulphide, ZnS. Examples of other refractive materials that can be used in the diffractive structure are Zirconium Dioxide,ZrO2, and Titanium Dioxide,TiO2. These materials provide a high refractive index and are sufficiently transparent. Other materials of both higher and lower refractive index are known and any of these can be used in the diffractive structure.

The holographic surface may be completely or partially covered with one or more holograms. The type of hologram formed on the holographic surface is not particularly limited and may be any pattern or image as may be required. Examples of holograms which may be formed on the holographic surface are decorative patterns or images, security and anti-counterfeiting patterns or images.

In one embodiment, the holographic film comprises a print-receptive coating. The print-receptive coating typically comprises acrylics, cellulosic polymers and preferably comprises nitrocellulose and/or vinyls. The thickness of the print-receptive coating is typically less than 10 µm, most preferably 0.6 to 1.5 µm

In one embodiment the holographic film comprises a layer of laminating adhesive. The laminating adhesive is typically heat and/or pressure activated. The laminating adhesive will normally be designed from a blend of synthetic and natural polymers, the choice of which will be greatly influenced by the type of substrate to which the coating is to be transferred and the equipment that will be used to apply it. The polymer type selected must give good adhesion to the substrate. The adhesives are typically a blend of polymeric materials and particulate fillers applied by gravure, Meyer bar coating, flexography or a similar technique. The melt and softening points of the adhesive are selected to provide adequate tack under specific application conditions. The electronegativity and chemical affinity of the polymers of the adhesive are selected to provide maximum adhesion to a broad range of surfaces or to a specific surface. The polymeric materials used may include acrylics, polyolefins and chlorinated polyolefins, polyamides, cellulose derivatives, vinyl and vinyl copolymers, hydrocarbons, cyclised rubbers, polyurethanes or polyesters. The thickness of the laminating adhesive is typically 50 µm or less, 30 µm or less, 10 µm or less or 1 to 2 µm.

In a preferred embodiment, the layer of laminating adhesive is compostable. If a non-compostable laminating adhesive is used in the present invention, the proportion of the holographic film which is non-compostable is reduced by a minor amount due to the laminating adhesive making up a very small part. The holographic film still provides significantly improved percentage of compostable materials compared to known holographic films.

The adhesive layer may be omitted if the holographic film is intended for application to an adhesive substrate or if an adhesive is to be introduced at the time of applying the film.

The present invention also provides the use of a thermostable layer for protecting a base layer from substantial detrimental modification during embossing, wherein the base layer comprises a core layer comprising a compostable polymer and each surface of the core layer bears a sealant layer. The thermostable layer, base layer and compostable polymer are preferably as described above.

The present invention also provides a film suitable for embossing and forming a holographic surface. Accordingly, the present invention provides a film comprising:
a base layer, wherein the base layer comprises a core layer comprising a compostable polymer and each surface of the core layer bears a sealant layer; and
an embossing layer contiguously attached to the base layer suitable for embossing and for bearing a diffractive structure to thereby define a holographic surface.

The present invention also provides a film comprising:
a base layer, wherein the base layer comprises a core layer comprising a compostable polymer and each surface of the core layer bears a sealant layer;
an embossing layer suitable for embossing and for bearing a diffractive structure to thereby define a holographic surface; and
a thermostable layer integral with the base layer and positioned on the opposite surface of the base layer to the embossed layer; wherein the embossed layer has a lower thermostability compared to the thermostable layer and the base layer is substantially free from defects introduced by substantial detrimental modification during embossing by virtue of the presence of the thermostable layer.

In this aspect of the present invention the film is in a state ready for embossing and for bearing a diffractive structure to thereby form a hologram. The configuration of the film, the base layer, the thermostable layer, embossing layer, diffractive structure and hologram which may be formed are as described previously.

The present invention also provides the use of a film suitable for embossing as described above for forming a holographic surface by embossing the embossing layer to form an embossed surface and depositing a diffractive structure on the embossed surface.

According to a third aspect, the present invention also provides a material comprising a substrate and a film, as defined previously, applied to a surface of the substrate.

The substrate may be a packaging material, preferably a sheet packaging material. The holographic film may be applied to one or each surface of the substrate. The substrate could be a packaging or wrapping material such as paper, card or plastics sheet, a sticker or could be an article that is itself to be sold. The substrate could also be a label, a tag, a greeting card or a book cover.

The film could be applied during manufacture or printing of the substrate or at later stages of the supply chain such as during filling of packaging or in retail outlets. The film is thus suitable for high volume production and mass application to cartons, labels and flexible packaging.

In a preferred embodiment, the substrate is compostable. For example, the substrate may comprise wood fibre.

The holographic surface of the film may be deposited on the surface of the substrate (holographic surface facing towards the surface of the substrate). Additionally or alternatively, the opposite surface of the holographic film to the holographic surface is deposited on the surface of the substrate (holographic surface facing away from the surface of the substrate).

According to a fourth aspect, the present invention also provides a packaging enclosure for a product, wherein the packaging enclosure is formed from a material as defined above. The film may be positioned on the external surface and/or the internal surface of the enclosure. The type of packaging enclosure is not particularly limited and is typically a box, a carton or a tube which is suitable for the packaging of retail goods. The enclosure is particularly suitable for packaging dry products, such as tobacco or dry food including biscuits and confectionary. The enclosure may be suitable for packaging bottled liquids such as beverages, healthcare and beauty treatments. The enclosure may also be suitable for packaging stationary items such as gift cards. The enclosure may comprise one or more folds as required to allow a desired shape to be formed.

According to the fifth aspect of the present invention, there is provided a method for forming a holographic film, comprising:
(a) providing a base layer, wherein the base layer comprises a core layer comprising a compostable polymer and each surface of the core layer bears a sealant layer;
(b) providing an embossing layer;
(c) embossing the embossing layer to form an embossed surface, wherein the embossing layer is contiguously attached to the base layer during embossing; and
(d) depositing a diffractive structure on the embossed surface; steps (c) and (d) imparting a hologram.

As discussed previously, in the embodiment of the present invention wherein method does not comprise providing a thermostable layer, a good quality holographic surface may be provided by using a sufficiently thick base layer which ensures that the effects of temperature and/or pressure during embossing on one surface of the base layer do not introduce defects to the sealant layer on the opposite surface of the base layer. Alternatively, during the embossing step, the sealant layer on opposite surface of the base layer to the surface to be embossed may be held in contact with a cooling means which prevents the formation of defects. A further way to prevent defects forming during embossing is to provide the embossed surface using short intervals of the required pressure and temperature to allow an embossed surface to be produced whilst not introducing defects to the sealant layer on the opposite surface.

The present invention also provides a method for forming a holographic film, comprising:
(a) providing a base layer, wherein the base layer comprises a core layer comprising a compostable polymer and each surface of the core layer bears a sealant layer;
(b) providing an embossing layer and a thermostable layer;
(c) embossing the embossing layer to form an embossed surface, wherein the thermostable layer prevents substantial detrimental modification to the base layer during embossing; and
(d) depositing a diffractive structure on the embossed surface; steps (c) and (d) imparting a hologram.

In one embodiment the sealant layer on one surface of the core layer is the embossing layer and is embossed in step (c). Examples of this embodiment are shown in Figures 2 and 4, where sealant layer 3a is the embossed layer. Alternatively, both of sealant layers of the base layer may be embossed.

Step (b) of the method according to the present invention may comprise coating the base layer with an embossing layer. Examples of this configuration are shown in Figures 3 and 5 where the embossing layer 4a has been coated on the sealant layer 3 a of the base layer. In step (c) the embossing layer is embossed to form an embossed surface.

In one embodiment the method further comprises a step of coating the base layer with a thermostable layer wherein the thermostable layer prevents substantial detrimental modification to the base layer during embossing. Examples of this configuration are shown in Figures 4 and 5 where the thermostable layer 4b has been coated on the sealant layer 3b of the base layer. In one embodiment, both surfaces of the base layer are coated with a thermostable layer. Any suitable coating technique known in the art may be used for this step such as gravure, flexographic, meyer rod and roll coating methods.

In one embodiment, the method according to the present invention is particularly advantageous because the presence of the thermostable layer reduces the formation of defects in the base layer during the embossing step. The method may also allow the embossing step to be carried out at lower temperatures.

The film is preferably a film as described above in the first or second aspect according to the present invention.

Any suitable embossing technique and apparatus may be used in step (c). The embossing step is typically carried out at a temperature of 60°C to 200°C, preferably 80°C to 160°C and a pressure of 50 to 500 Ncm⁻¹

In step (d) a diffractive structure is deposited on the embossed surface. Any suitable method, such as vacuum deposition, may be used to deposit the diffractive structure on the embossed surface.

The method according to the present invention may comprise a further step of depositing a laminating adhesive onto the holographic film. The laminating adhesive may be deposited on the holographic surface side of the holographic film or the opposite side of the film depending upon which side of the film is to be attached to a substrate.

In one embodiment, the method comprises a further step of depositing a print-receptive layer onto the holographic film. The print-receptive coating may be deposited on the holographic surface side of the holographic film or the opposite side of the film depending upon which side of the film is to be attached to a substrate. The method may also comprise a further step of printing on the print-receptive layer. According to a sixth aspect of the present invention, there is provided a method for forming a holographic material comprising the method for forming a holographic film as defined above and a step of depositing the holographic film on a surface of a substrate. The holographic material is preferably the material described above in the third aspect of the present invention and the film is preferably the holographic film described above in the first or second aspect of the present invention.

The film may be deposited on the substrate by any suitable method such as by lamination. This step may require the application of pressure and/or heat to adhere the film to the substrate. The film may comprise a laminating adhesive or a laminating adhesive may be attached to the substrate. The film may be deposited on one or each surface of the substrate.

In one embodiment, the method for forming a holographic film comprises a step of printing on the print-receptive layer. This step of printing may be carried out before or after the step of depositing the holographic film on the surface of a substrate.

While this invention has been particularly shown and described with reference to preferred embodiments, it will be understood to those skilled in the art that various changes in form and detail may be made without departing from the scope of the invention as defined by the appendant claims.

## Claims

1. A film comprising:
a base layer, wherein the base layer comprises a core layer comprising a compostable polymer and each surface of the core layer bears a sealant layer;
an embossing layer contiguously attached to the base layer suitable for embossing, and for bearing a diffractive structure thereby defining a holographic surface.

2. A film according to claim 1, wherein the film further comprises a thermostable layer integral with the base layer and positioned on the opposite surface of the base layer to the embossing layer; wherein the embossing layer has a lower thermostability compared to the thermostable layer and the base layer is substantially free from defects introduced by substantial detrimental modification during embossing of the embossing layer by virtue of the presence of the thermostable layer.

3. A film according to any preceding claim, wherein the embossing layer is an embossed layer bearing a diffractive structure.

4. A film according to any of claims 2 to 3, wherein the sealant layer on one surface of the core layer is, or bears, the thermostable layer and the sealant layer on the opposite surface of the core layer is, or bears, the embossed layer.

5. A film according to any of claims 1 to 3, wherein the sealant layer on one surface of the core layer is the embossing layer.

6. A film according to any of claims 2 to 5, wherein the film comprises multiple thermostable layers.

7. A film according to any preceding claim, wherein the surface of the embossing layer facing away from the base layer is the holographic surface.

8. A film according to any preceding claim, wherein the base layer is non-thermoplastic.

9. A film according to any preceding claim, wherein the compostable polymer is selected from cellulosic polymers, oxyalkanoyl polymers and polyesters.

10. A film according to claim 9, wherein the compostable polymer is cellulose acetate or cellophane.

11. A film according to any of claims 2 to 10, wherein the thermostable layer is selected from acrylic, methylmethacrylate, nitrocellulose or mixtures thereof.

12. A film according to any of claims 2 to 11, wherein the thermostable layer is compostable.

13. A method for forming a holographic film, comprising:
(a) providing a base layer, wherein the base layer comprises a core layer comprising a compostable polymer and each surface of the core layer bears a sealant layer;
(b) providing an embossing layer;
(c) embossing the embossing layer to form an embossed surface, wherein the embossing layer is contiguously attached to the base layer during embossing; and
(d) depositing a diffractive structure on the embossed surface; steps (c) and (d) imparting a hologram.

14. A method according to claim 13, wherein the method further comprises a step of coating the base layer with a thermostable layer.

15. A method according to claim 13, wherein step (b) further comprises providing a thermostable layer; and the thermostable layer prevents substantial detrimental modification to the base layer during embossing.

16. A method according to any of claims 13 to 15, wherein the sealant layer on one surface of the core layer is the embossing layer and is embossed in step (c).

17. Use of a thermostable layer for protecting a base layer from substantial detrimental modification during embossing, wherein the base layer comprises a core layer comprising a compostable polymer and each surface of the core layer bears a sealant layer.
